# EUROPEAN PATENT APPLICATION

(11) **EP 4 715 951 A2**
(43) Date of publication of application: **25.03.2026**
(21) Application number: 25197865.6
(22) Date of filing: 25.08.2025
(51) Int. Cl.: H01M 10/42, H02J 7/34, H02J 7/52, H02J 7/54, H02J 7/56

(54) **MODULE INTERFACE DEVICE FOR BATTERY MODULES FEATURING CELL BALANCING AND ISOLATION**

(30) Priority: 18.09.2024 US 202418889157
(71) Applicant: The Boeing Company, Arlington, VA 22202 (US)
(72) Inventor: BERON-RAWDON, Deborah Ann, Arlington, 22202 (US); ATMUR, Robert J., Arlington, 22202 (US)
(74) Representative: Bugnion S.p.A. - US1

(57) **Abstract**

A module interface device for a multi-cell battery module comprises a cathode bus connectable to a cathode terminal and an anode bus connectable to an anode terminal of the battery module, and a set of one or more inter-cell taps connectable to respective inter-cell electrical interconnectors that interconnect neighboring pairs of cells of the battery module. The module interface devices comprises a cell balancing circuit that includes: an electrically conductive pathway that joins the cathode bus with the anode bus, a set of multiple resistive-capacitive elements arranged along the electrically conductive pathway, and a set of one or more switches in which a respective switch is located along each inter-cell tap. Each inter-cell tap joins the electrically conductive pathway at a respective location between a different neighboring pair of resistive-capacitive elements.

## Description

### FIELD

A disclosed invention relates generally to managing battery modules of a battery system.

### BACKGROUND

Battery systems can be used in connection with mobile platforms and fixed installations to provide energy storage and to power electrical loads. Damage or loss of mobile platforms and fixed installations can result from failures of a battery system. Some battery systems can include one or more battery modules to provide a desired level of battery function and performance. An individual battery module can include multiple battery cells. Voltage imbalances among cells of a battery module can result in failure or impaired performance of the battery module and the battery system that incorporates the battery module.

### SUMMARY

A module interface device is disclosed for a battery module that includes a set of multiple cells interconnected in a cell-ordered series between a cathode terminal and an anode terminal of the battery module. The module interface device comprises a cathode bus having a battery-side cathode interface connectable to the cathode terminal of the battery module, and an anode bus having a battery-side anode interface connectable to the anode terminal of the battery module. The module interface device further includes a set of one or more inter-cell taps connectable to respective inter-cell electrical interconnectors that interconnect neighboring pairs of cells within the cell-ordered series of the battery module.

The module interface device further comprises a cell balancing circuit that includes a set of multiple resistive-capacitive elements arranged in an element-ordered series along an electrically conductive pathway of the cell balancing circuit. The electrically conductive pathway joins the cathode bus with the anode bus. Each inter-cell tap joins the electrically conductive pathway between a corresponding neighboring pair of resistive-capacitive elements within the element-ordered series. The module interface device further comprises a set of switches in which a respective switch is located along each inter-cell tap.

The set of switches of the cell balancing circuit are operable between an open state during a charging portion of a duty cycle in which the set of resistive-capacitive elements are charged by electrical energy supplied via the cathode bus and the anode bus, and a closed state during a cell balancing portion of the duty cycle in which the set of resistive-capacitive elements discharge electrical energy to the set of cells of the battery module connected to the module interface device to reduce a voltage imbalance among the set of cells.

According to another example, a method is disclosed for controlling a module interface device connected to a battery module that includes a set of multiple cells interconnected in a cell-ordered series between a cathode terminal and an anode terminal of the battery module. The method comprises, during a charging portion of a duty cycle, supplying electrical energy from a source to a cathode bus and an anode bus of the module interface device. The cathode bus has a battery-side cathode interface connected to the cathode terminal of the battery module, and the anode bus has a battery-side anode interface connected to the anode terminal of the battery module. A first portion of the electrical energy supplied during the charging portion of the duty cycle charges the set of cells of the battery module via the cathode terminal and the anode terminal. A second portion of the electrical energy supplied during the charging portion of the duty cycle charges a set of multiple resistive-capacitive elements of the module interface device.

The method further comprises, during a cell balancing portion of the duty cycle, discontinuing supplying electrical energy from the source to the cathode bus and the anode bus of the module interface device, and supplying electrical energy discharged from the set of resistive-capacitive elements of the module interface device to the set of cells of the battery module. The set of inter-cell taps are connected to a set of one or more inter-cell electrical interconnectors that interconnect neighboring pair of cells within the cell-ordered series of the battery module

According to another example, a battery management system is disclosed for management of a battery module that includes a set of multiple cells interconnected in a cell-ordered series between a cathode terminal and an anode terminal of the battery module. The battery management system comprises a module interface device that includes a cathode bus having a battery-side cathode interface connected to the cathode terminal of the battery module, anode bus having a battery-side anode interface connected to the anode terminal of the battery module, and a set of one or more inter-cell taps connected to respective inter-cell electrical interconnectors that interconnect neighboring pairs of cells within the cell-ordered series of the battery module.

The module interface device further includes a cell balancing circuit that includes: an electrically conductive pathway that joins the cathode bus with the anode bus, a set of multiple resistive-capacitive elements arranged in an element-ordered series along the electrically conductive pathway, wherein each inter-cell tap of the set of inter-cell taps joins the electrically conductive pathway at a respective location between a different neighboring pair of resistive-capacitive elements within the element-ordered series, and a set of one or more switches in which, for each inter-cell tap of the set of inter-cell taps, a respective switch of the set of switches is located along the inter-cell tap. The battery management system further comprises a control system configured to, during a charging portion of a duty cycle, operate the set of switches in an open state and supply electrical energy from a source to the cathode bus and the anode bus. A portion of the electrical energy supplied during the charging portion of the duty cycle charges the set of resistive-capacitive elements. The control system is further configured to, during a cell balancing portion of the duty cycle, operate the set of switches in a closed state to supply electrical energy discharged from the set of resistive-capacitive elements to the set of cells of the battery module.

### BRIEF DESCRIPTION OF THE DRAWINGS

FIG. 1 is a schematic diagram depicting an example battery management system.
FIG. 2 is a schematic diagram depicting aspects of an example module interface device.
FIG. 3 is a schematic diagram depicting a first example of the module interface device of FIG. 2.
FIG. 4 is a schematic diagram depicting a second example of the module interface device of FIG. 2.
FIG. 5 is a flow diagram depicting an example method for managing a battery module.
FIG. 6 is a schematic diagram depicting an example computing system that can form part of a control system of FIG. 1.

### DETAILED DESCRIPTION

As briefly introduced above, battery systems can be used in connection with mobile platforms and fixed installations to provide energy storage and power electrical loads. Damage or loss of mobile platforms and fixed installations can result from failures of a battery system.

As an illustrative example, some battery systems include multiple 40V lead acid batteries in high voltage (240V) installations. The use of lead acid batteries can result in a significant weight impact, particularly for mobile platforms. Utilization of lithium ion batteries or other battery technologies in place of lead acid batteries may be problematic due to increased risk of overheating, arcing, or other failure modes as compared to lead acid batteries. In some cases, multiple lithium ion battery modules can be used to replace a larger lead acid battery module if the lithium ion battery modules are mechanically separated from each other and individual battery modules are below a threshold energy storage capacity or specified voltage rating.

The disclosed battery module architecture, battery management system, and methods for battery management offer the potential to reduce battery failures by isolating individual battery modules and by reducing voltage imbalances among battery cells within battery modules.

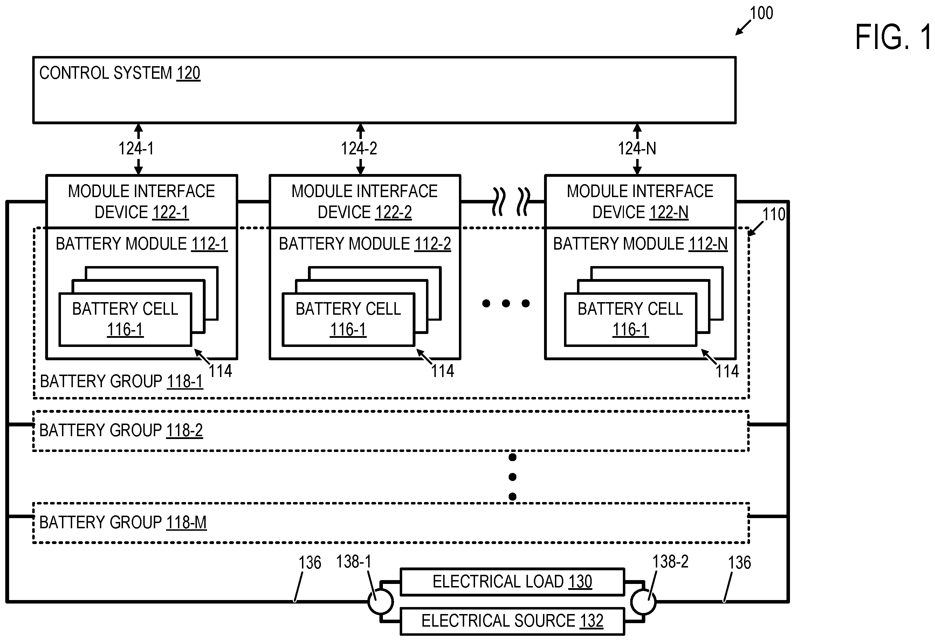

FIG. 1 is a schematic diagram depicting an example battery management system 100 for managing a battery system that includes one or more battery modules. In FIG. 1, an example battery system 110 includes at least a first battery module 112-1 and a second battery module 112-2. Battery system 110 can further include one or more additional battery modules, depicted in FIG. 1 as battery module 112-N, in which the term "N" can represent any suitable quantity of battery modules.

Each battery module of battery system 110 can include a set of multiple battery cells 114, an example of which is depicted in FIG. 1 as battery cell 116-1. The set of battery cells 114 of a battery module can include any suitable quantity of battery cells, including two, three, four, five or more, tens, hundreds or more battery cells, as examples.

Battery modules of battery system 110 can be arranged in a series configuration, in a parallel configuration, or in a combination of a series configuration and a parallel configuration with respect to an electrical load 130 and/or an electrical source 132. In the example of FIG. 1, battery modules 112-1 through 112-N are arranged in a series configuration to form a battery group 118-1. As an illustrative example, battery module 112-1 can have a specified voltage rating of 16 volts, battery module 112-2 can have a specified voltage rating of 12 volts that differs from battery module 112-1, and battery module 112-N can have a specified voltage rating of 12 volts for a total combined voltage rating of 40 volts for battery group 118-1.

Battery system 110 can include multiple battery groups arranged in a parallel configuration and/or a series configuration with respect to electrical load 130 and electrical source 132 in which each battery group includes one or more battery modules. For example, in FIG. 1, battery groups 118-2 through 118-M are schematically depicted in a parallel configuration with battery group 118-1, in which the term "M" can represent any suitable quantity of battery groups.

In another example, battery modules 112-2 through 112-N can be included in different battery groups arranged in parallel with battery group 118-1 that includes battery module 112-1. For example, battery module 112-2 can form part of battery group 118-2, and battery module 112-N can form part of battery group 118-M. Accordingly, it will be understood that multiple battery modules of battery system 100 can include any suitable arrangement with respect to electrical load 130 and electrical source 132.

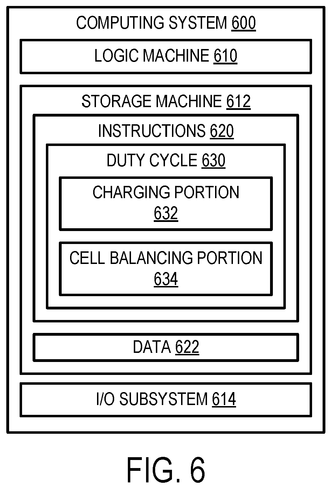

Battery management system 100 further includes a control system 120 and multiple module interface devices 122-1 through 112-N that are operatively coupled to the control system via electrical connections 124-1 through 124-N, respectively. Aspects of control system 120 are described in further detail herein with reference to computing system 600 of FIG. 6.

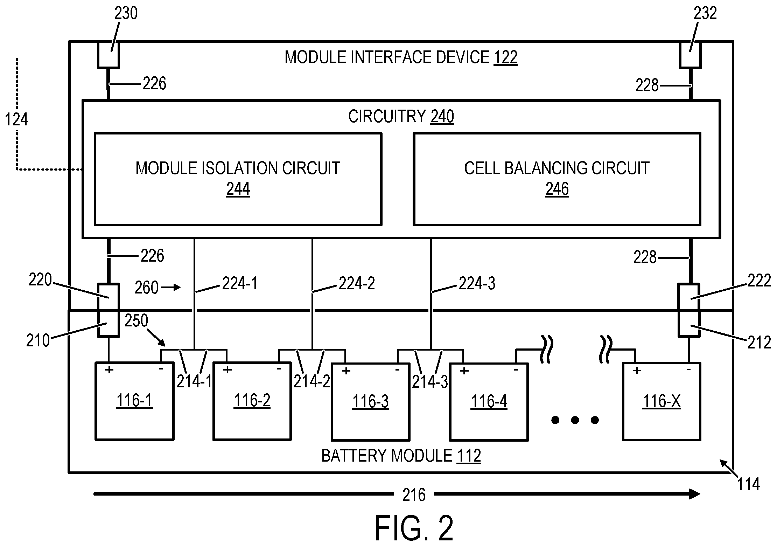

For each battery module of battery system 110, a respective module interface device (e.g., 122-1 through 122-N) of battery management system 100 is connected to or is connectable to the battery module, as described in further detail with reference to FIG. 2. Accordingly, battery management system 100 can include a module interface device for each battery module of battery system 110. In the example of FIG. 1, battery management system 100 includes a first module interface device 122-1 that is operatively coupled to battery module 112-1, and a second module interface device 122-2 that is operatively coupled to battery module 112-2. For each additional battery module of battery system 110, represented by battery module 112-N, battery management system 110 can include an additional module interface device that is operatively coupled to the battery module, as represented by module interface device 122-N.

Each module interface device of battery management system 100, including module interface devices 122-1 through 122-N can be electrically coupled to electrical load 130 and/or electrical source 132 via an electrical transmission circuit 136 of battery management system 100. Electrical transmission circuit 136, depicted schematically in FIG. 1, can include various electrical pathways that electrically couple electrical load 130 and/or electrical source 132 to the module interface devices (e.g., 122-1 through 122-N) of battery management system 100 according to any suitable series and/or parallel configuration, which in turn are electrically coupled to respective battery modules (e.g., 112-1 through 112-N).

**In** the example of FIG. 1, battery management system 100 includes one or more switches (e.g., 138-1, 138-2) located along electrical transmission circuit 136 that enable electrical load 130 and electrical source 132 to be selectively connected to and disconnected from the module interface devices (e.g., 122-1 through 122-N) of the battery management system by control system 120. For example, electrical load 130 can be connected to the module interface devices of battery management system 100, while electrical source 132 is disconnected from the module interface devices during a first operating state in which electrical energy stored at the battery modules of battery system 100 can be used to power the electrical load. As another example, electrical source 132 can be connected to the module interface devices, while electrical load 130 is disconnected from the module interface devices of battery system 100 during a second operating state in which electrical energy provided by electrical source 132 can be used to charge the battery modules.

FIG. 2 is a schematic diagram depicting additional aspects of the module interface devices and battery modules of FIG. 1, described with reference to module interface device 122 that is connected to battery module 112. Module interface devices 122-1 through 122-N previously described with reference to FIG. 1 are examples of module interface device 122 of FIG. 2. Battery modules 112-1 through 112-N of FIG. 1 are examples of battery module 112 of FIG. 2.

In the example of FIG. 2, battery module 112 includes a cathode terminal 210 and an anode terminal 212. Each battery module of battery system 110 of FIG. 1, including battery modules 112-1 through 112-N similarly include a cathode terminal and an anode terminal.

Battery module 112 further includes the set of cells 114. In the example, of FIG. 2, the set of cells 114 includes cells 116-1, 116-2, 116-3, and 116-4 through 116-X, where the term "X" can represent any suitable quantity of cells. The set of cells 114 are interconnected in a cell-ordered series 216 between cathode terminal 210 and anode terminal 212 of battery module 112.

In the example of FIG. 2, a set of one or more inter-cell electrical interconnectors 250 of battery module 112 interconnect neighboring pairs of cells within cell-ordered series 216. For example, cells 116-1 and 116-2, as a first neighboring pair of cells, are interconnected by a respective inter-cell electrical interconnector 214-1; cells 116-2 and 116-3, as a second neighboring pair of cells, are interconnected by a respective inter-cell electrical interconnector 214-2; and cells 116-3 and 116-4, as a third neighboring pair of cells, are interconnected by a respective inter-cell electrical interconnector 214-3.

Cell 116-1, representing a first cell within cell-ordered series 216 relative to cathode terminal 210, is electrically coupled to the cathode terminal. Cell 116-X, representing a last cell within cell-ordered series 216 relative to cathode terminal 210, is electrically coupled to anode terminal 212. In this configuration, cell-ordered series 216 has the following order of cells: 116-1, 116-2, 116-3, 116-4 through 116-X beginning at cathode terminal 210 and ending at anode terminal 212.

As the set of cells 114 are interconnected in cell-ordered series 216 in the example of FIG. 2, the voltage rating of the set of cells is cumulative between cathode terminal 210 and anode terminal 212. For example, where the set of cells 114 includes four cells 116-1, 116-2, 116-3, and 116-4 that each have a 4 volt rating interconnected in a cell-ordered series, battery module 112 can present 16 volts between cathode terminal 210 and anode terminal 212. As another example, where the set of cells 114 includes three cells 116-1, 116-2, and 116-3 that each have a 4 volt rating interconnected in a cell-ordered series, battery module 112 can present 12 volts between cathode terminal 210 and anode terminal 212.

**In** the example of FIG. 2, module interface device 122 includes a cathode bus 226 having a battery-side cathode interface 220 that is connected to cathode terminal 210 of battery module 112. Module interface device 122 further includes an anode bus 228 having a battery-side anode interface 222 that is connected to anode terminal 212 of battery module 112.

Module interface device 122 is depicted in FIG. 2 electrically coupled to battery module 112 via battery-side cathode interface 220 and battery-side anode interface 222. It will be understood that the module interface devices disclosed herein, including example module interface device 122, can be separable from the battery modules. **In** this configuration, battery-side cathode interface 220 is connectable to cathode terminal 210, and battery-side anode interface 222 is connectable to anode terminal 212. Each of module interface devices 122-1 through 122-N of FIG. 1 can similarly include an instance of battery-side cathode interface 220 and an instance of battery-side anode interface 222 by which the module interface device can be connected to respective cathode and anode terminals of a battery module.

Module interface device 122 further includes a set of inter-cell taps 260 connected to or connectable to respective inter-cell electrical interconnectors (e.g., 214-1, 214-2, 214-3, etc.) by which neighboring pairs of cells are interconnected within cell-ordered series 216 of the set of cells 114. Battery module 112 can include a respective inter-cell tap for each inter-cell electrical interconnector of the battery module. For example, where battery module 112 includes three inter-cell electrical interconnectors 214-1, 214-2, and 214-3, module interface device 122 can include three inter-cell taps 224-1, 224-2, and 224-3 that are respectively connected to inter-cell electrical interconnectors 214-1, 214-2, and 214-3.

In examples where battery module 112 includes X cells, the quantity of neighboring pairs of cells interconnected within cell-ordered series 216 can be represented by the expression X-1. For example, where the set of cells 114 includes four cells interconnected within cell-ordered series 216, there are three neighboring pairs of cells. Thus, in this example, the set of inter-cell taps 260 of module interface device 122 includes three inter-cell taps for the three neighboring pairs of cells. For example, in FIG. 2, inter-cell tap 224-1 is electrically coupled to inter-cell electrical interconnector 214-1 by which neighboring pair of cells 116-1 and 116-2 are interconnected within cell-ordered series 216. The set of inter-cell taps 260 further includes inter-cell tap 224-2 that is electrically coupled to inter-cell electrical interconnector 214-2 by which neighboring pair of cells 116-2 and 116-3 are interconnected within cell-ordered series 216, and inter-cell tap 224-3 that is electrically coupled to inter-cell electrical interconnector 214-3 by which neighboring pair of cells 116-3 and 116-4 are interconnected within cell-ordered series 216. Cathode bus 226 has a system-side cathode interface 230 that is connected to an electrical load and/or electrical source, such as electrical load 130 and electrical source 132 of FIG. 1. Anode bus 228 has a system-side anode interface 232 that is connected to the electrical load and/or electrical source. Each of module interface devices 122-1 through 122-N of FIG. 1 can similarly include an instance of system-side cathode interface 230 and an instance of system-side anode interface 232 by which the module interface device can be connected to an electrical load and/or electrical source.

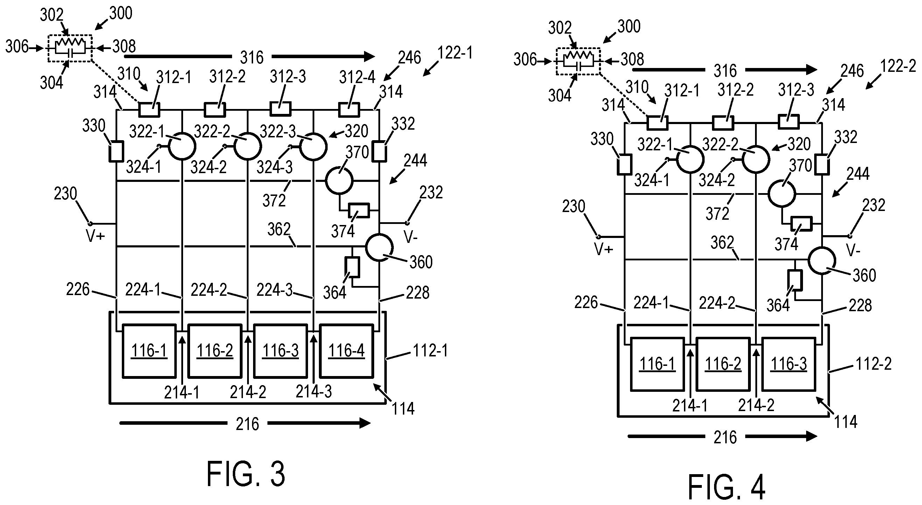

Module interface device 122 further includes circuitry 240 that is electrically coupled to cathode bus 226 and to anode bus 228. Circuitry 240 can include a module isolation circuit 244 and a cell balancing circuit 246, depicted schematically in FIG. 2. Aspects of module isolation circuit 244 and cell balancing circuit 246 are described in further detail with reference to FIGS. 3 and 4. Each of module interface devices 122-1 through 122-N of FIG. 1 can similarly include an instance of circuitry 240, including module isolation circuit 244 and cell balancing circuit 246.

Module isolation circuit 244 of each module interface device is operable by control system 120 of FIG. 1 to disconnect the battery module 112 from system-side cathode interface 230 and/or system-side anode interface 232, thereby isolating the battery module from the electrical load, the electrical source, and other module interface devices of battery management system 100 that are connected to interfaces 230 and 232. Cell balancing circuit 246 of each module interface device is operable by control system 120 of FIG. 1 to balance voltages of the set of cells 114 by reducing or eliminating a voltage imbalance among the set of cells of the battery module. Control system 120 of FIG. 1 can control module isolation circuit 244 and cell balancing circuit 246 via electrical connections 124, which is an example of electrical connections 124-1 through 124-N of FIG. 1.

FIG. 3 is a schematic diagram depicting module interface device 122-1 of FIG. 1 as a first example of previously described module interface device 122 of FIG. 2. In FIG. 3, module interface device 122-1 is connected to battery module 112-1 of FIG. 1 as an example of previously described battery module 112 of FIG. 2.

**In** the example of FIG. 3, the set of cells 114 of battery module 112-1 includes four cells 116-1, 116-2, 116-3, and 116-4, and the set of inter-cell electrical interconnectors includes three inter-cell electrical interconnectors 214-1, 214-2, 214-3 that interconnect neighboring pairs of cells within cell-ordered series 216, as previously described with reference to FIG. 2. Module interface device 122-1 further includes three inter-cell taps 224-1, 224-2, 224-3 that are connected or connectable to respective inter-cell electrical interconnectors 214-1, 214-2, 214-3 of battery module 112-1. Examples of system-side cathode interface 230 (identified as "V+") of cathode bus 226, and system-side anode interface 232 (identified as "V-") of anode bus 228 are also depicted in FIG. 3.

**In** the example of FIG. 3, cell balancing circuit 246 of module interface device 122-1 includes an electrically conductive pathway 314 that joins cathode bus 226 with anode bus 228. Cell balancing circuit 246 of module interface device 122-1 further includes a set of multiple resistive-capacitive elements 310 arranged in an element-ordered series 316 along electrically conductive pathway 314. For each cell of the battery module, cell balancing circuit 246 can include a respective resistive-capacitive element. For example, a quantity of resistive-capacitive elements within the set of elements 310 of element-ordered series 316 can correspond to a quantity of cells of the set of cells 114 that are interconnected within cell-ordered series 216. **In** the example of FIG. 3, the set of resistive-capacitive elements 310 includes four resistive-capacitive elements 312-1, 312-2, 312-3, 312-4 within element-ordered series 316, which corresponds to the four cells 116-1, 116-2, 116-3, 116-4 of battery module 112-1 interconnected in cell-ordered series 216.

Each inter-cell tap (e.g., 224-1 through 224-3) of the set of inter-cell taps joins electrically conductive pathway 314 between a different neighboring pair of resistive-capacitive elements of the set of elements 310 within element-ordered series 316. In the example of FIG. 3, inter-cell tap 224-1 joins electrically conductive pathway 314 between a corresponding neighboring pair of resistive-capacitive elements 312-1 and 312-2; inter-cell tap 224-2 joins electrically conductive pathway 314 between a corresponding neighboring pair of resistive-capacitive elements 312-2 and 312-3; and inter-cell tap 224-3 joins electrically conductive pathway 314 between a corresponding neighboring pair of resistive-capacitive elements 312-3 and 312-4. Each resistive-capacitive element (e.g., 312-1 through 312-4) of the set of elements 310 exhibits an electrical resistance and an electrical capacitance. In at least some examples, each resistive-capacitive element (e.g., 312-1 through 312-4) of the set of elements 310 can include one or more passive electrical components. As schematically depicted in FIG. 3 by detailed view 300 of resistive-capacitive element 312-1, each resistive-capacitive element (e.g., 312-1 through 312-4) of the set of elements 310 can include a resistor 302 that exhibits an electrical resistance arranged in parallel with a capacitor 304 that exhibits an electrical capacitance between opposing interfaces 306 and 308 of the element that are connected to electrically conductive pathway 314.

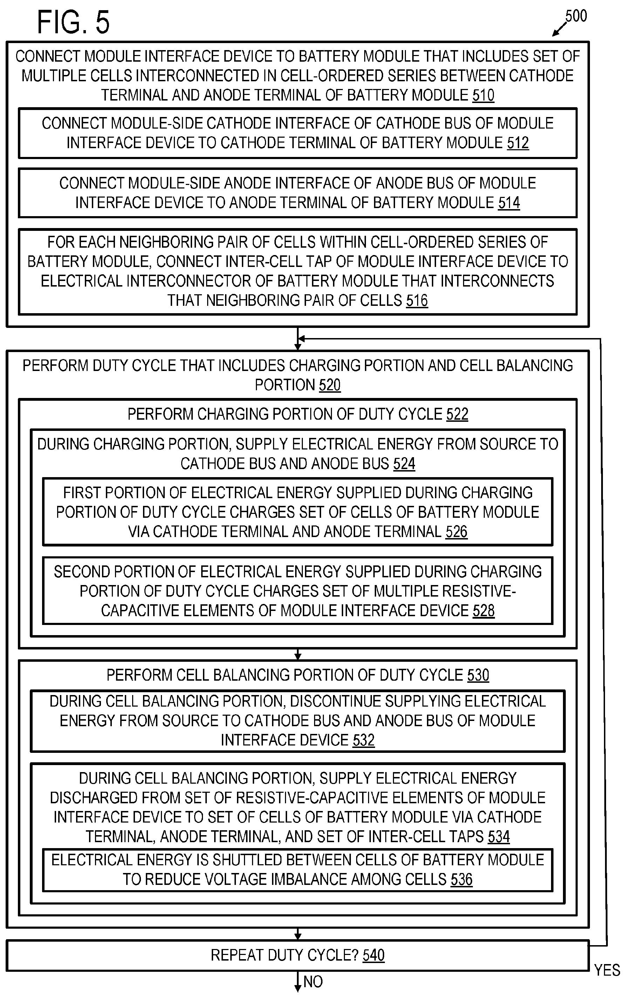

A capacitance value of capacitor 304 can be selected to provide a desired voltage imbalance correction with respect to the set of cells 114 of the battery module. For example, as described in further detail with reference to FIG. 5, capacitor 304 can be discharged as part of a cell balancing portion of a duty cycle. The amount of electrical energy discharged by the capacitor can be specified through selection of capacitance value to achieve a target increase in voltage of a deficient cell of the battery module, as an example.

Each resistive-capacitive element (e.g., 312-1 through 312-4) of the set of elements 310 can be similarly configured and have the same specified electrical resistance value and capacitance value as the other resistive-capacitive elements of the set of elements 310 within element-ordered series 316. This configuration of cell balancing circuit 246 can be used to balance cell voltage between similarly configured and rated cells (e.g., 116-1 through 116-4) of the battery module that are interconnected within cell-ordered series 216. For example, electrically conductive pathway 314 and the set of resistive-capacitive elements 310 form a voltage divider for the set of inter-cell taps.

Cell balancing circuit 246 further includes a set of one or more switches 320. For each inter-cell tap, a respective switch of the set of switches 320 is located along the inter-cell tap. **In** the example of FIG. 3, the set of switches 320 includes a switch 322-1 located along inter-cell tap 224-1, a switch 322-2 located along inter-cell tap 224-2, and a switch 322-3 located along inter-cell tap 224-3.

Each switch of the set of switches 320 includes an electrical contact by which a control signal applied to the electrical contact varies operation of the switch between an open state and a closed state. For example, switch 322-1 includes an electrical contact 324-1, switch 322-2 includes an electrical contact 324-2, and switch 322-3 includes an electrical contact 324-3 to which a control signal can be applied to vary operation of the switches between the open state and the closed state. Control system 120 of FIG. 1 can be operatively coupled to electrical contacts 324-1 through 324-3 via electrical connections 124-1 depicted schematically in FIG. 1. As an example, each switch of the set of switches 320 can take the form a field-effect transistor (FET).

In at least some examples, electrically conductive pathway 314 can be electrically coupled to cathode bus 226 via a first resistor 330, and to anode bus 228 via a second resistor 332. Resistors 330 and 332 are included in this example to balance impedances of the circuit. As the switches (e.g., as FETs) have an impedance, to shuttle current within the circuit and among the battery cells to balance the battery cells, a resistance value of resistors 330 and 332 can be selected such that the impedance presented to each battery cell is matched or otherwise equal among the set of battery cells. In this example, matching the impedance can be within a threshold difference, such as less than a threshold %, (e.g., 3% or less impedance difference, other suitable value).

FIG. 3 further depicts an example of module isolation circuit 244 of FIG. 2. Module isolation circuit 244 is operable to disconnect the battery module from at least one or both of the system-side cathode interface 230 and/or the system-side anode interface 232. For example, switch 360 located along anode bus 228 is configured as a series switch that allows charge and discharge current to flow in and out of the set of battery cells 114. Switch 360 can take the form of a FET, as an example. In the example of FIG. 3, first and second terminals of switch 360 join anode bus 228 on opposing sides of the switch between the set of battery cells and cell balancing circuit 246, and a third terminal of switch 360 is connected to an electrically conductive pathway 362 of module isolation circuit 244 that is connected to cathode bus 226 between the set of battery cells 114 and cell balancing circuit 246. Module isolation circuit 244 further includes a resistor in parallel with switch 360 between electrically conductive pathway 362 and anode bus 228 at a location between the set of battery cells 114 and switch 360. When switch 360 is switched to an open state, the set of battery cells 114 are disconnected from system-side cathode interface 230 and the system-side anode interface 232 (e.g., disconnected from V+, V-). When switch 360 is switched to a closed state, the set of battery cells 114 are connected to system-side cathode interface 230 and the system-side anode interface 232 (e.g., connected to V+, V-). Switch 360 can be controlled between the open state and closed state by control system 120 of FIG. 1.

Module isolation circuit 244 further includes a switch 370 located along an electrically conductive pathway 372 of the module isolation circuit that joins cathode bus 226 and anode bus 228. In this example, electrically conductive pathway 372 is located between the set of battery cells 114 and cell balancing circuit 246. Switch 370 can take the form of a FET, as an example. In the example of FIG. 3, first and second terminals of switch 370 join electrically conductive pathway 372 on opposing sides of the switch, and a third terminal is connected to a resistor 374 of module isolation circuit 244 that is connected to anode bus 228 between the set of battery cells 114 and cell balancing circuit 246. Switch 370, in this example, serves as an isolation / bypass switch, that can be switched to an open state during charging of the set of battery cells 114 and the set of resistive-capacitive elements 310, and during discharging of the set of battery cells 114 and the set of resistive-capacitive elements 310. Switch 370 can be switched to a closed state to provide a circuit protection function, such as when charging and discharging of the set of battery cells and the set of resistive-capacitive elements 310 is not being performed. Switch 370 can be controlled between the open state and closed state by control system 120 of FIG. 1.

FIG. 4 is a schematic diagram depicting module interface device 122-2 of FIG. 1 as a second example of previously described module interface device 122 of FIG. 2. In FIG. 4, module interface device 122-2 is connected to battery module 112-2 of FIG. 1 as another example of previously described battery module 112 of FIG. 2.

Module interface device 122-2 of FIG. 4 includes many of the components previously described with reference to module interface device 112-1 of FIG. 3. However, in the example of FIG. 4, the set of cells 114 of battery module 112-2 includes three cells 116-1, 116-2, and 116-3 in contrast to the four cells of battery module 112-1. Accordingly, the set of resistive-capacitive elements 310 of cell balancing circuit 246 in the example of FIG. 4 includes three elements 312-1, 312-2, and 312-3. For the three cells of battery module 112-2, the set of inter-cell electrical interconnectors includes two inter-cell electrical interconnectors 214-1 and 214-2 that interconnect neighboring pairs of cells within cell-ordered series 216. Accordingly, module interface device 122-2 includes two inter-cell taps 224-1 and 224-2 that are connected or connectable to respective inter-cell electrical interconnectors 214-1 and 214-2 of battery module 112-2 in the example of FIG. 4. Furthermore, as module interface device 122-2 includes two inter-cell taps 224-1 and 224-2 in this example, cell balancing circuit 246 includes two switches 324-1 and 324-2 located along inter-cell taps 224-1 and 224-2, respectively.

FIG. 5 is a flow diagram depicting an example method 500 for controlling a module interface device connected to a battery module. Method 500 can be performed by control system 120 of FIG. 1, for example, using any of the previously described module interface devices of FIGS. 1-4.

At 510, the method can include connecting the module interface device to the battery module. As previously described, the battery module can include a set of multiple cells interconnected in a cell-ordered series between a cathode terminal and an anode terminal of the battery module.

As part of connecting the module interface device to the battery module at 510, the method at 512 can include connecting a battery-side cathode interface of a cathode bus of the module interface device to the cathode terminal of the battery module. Additionally, as part of connecting the module interface device to the battery module at 510, the method at 514 can include connecting a battery-side anode interface of an anode bus of the module interface device to the anode terminal of the battery module. As part of connecting the module interface device to the battery module at 510, the method at 516 can include, for each neighboring pair of cells within the cell-ordered series of the battery module, connecting an inter-cell tap of the module interface device to an electrical interconnector of the battery module that interconnects that neighboring pair of cells.

At 520, the method can include performing a duty cycle that includes a charging portion and a cell balancing portion. At 522, the method can include performing the charging portion of the duty cycle. During the charging portion of the duty cycle performed at 522, the method can include supplying electrical energy from a source (e.g., electrical source 132 of FIG. 1) to the cathode bus and the anode bus of the module interface device at 524. For example, electrical energy can be supplied from the source to the cathode bus via system-side cathode interface 230 and to the anode bus via system-side anode interface 232.

As previously described at 512 and 514, the battery-side cathode interface of the cathode bus is connected to the cathode terminal of the battery module, and the battery-side anode interface of the anode bus is connected to the anode terminal of the battery module. As indicated at 526, a first portion of the electrical energy supplied during the charging portion of the duty cycle at 524 charges the set of cells of the battery module via the cathode terminal and the anode terminal.

Additionally, as indicated at 528, a second portion of the electrical energy supplied during the charging portion of the duty cycle at 524 charges a set of multiple resistive-capacitive elements (e.g., 310 of FIGS. 3 and 4) of the module interface device. As previously described with reference to FIGS. 3 and 4, each resistive-capacitive element of the set of resistive-capacitive elements can include a resistor and a capacitor arranged in parallel. In this example, the second portion of the electrical energy supplied during the charging portion of the duty cycle charges the capacitor of each resistive-capacitive element of the set of resistive-capacitive elements. Following the charging portion of the duty cycle performed at 522, the method at 530 can include preforming the cell balancing portion of the duty cycle. At 532, during the cell balancing portion of the duty cycle, the method can include discontinuing supplying electrical energy from the source to the cathode bus and the anode bus of the module interface device.

Additionally, during the cell balancing portion of the duty cycle, the method at 534 can include supplying electrical energy discharged from the set of resistive-capacitive elements of the module interface device to the set of cells of the battery module via the cathode terminal, the anode terminal, and a set of one or more inter-cell taps (e.g., 260 of FIG. 2) connected to a set of one or more inter-cell electrical interconnectors (e.g., 250 of FIG. 2) that interconnect neighboring pairs of cells within the cell-ordered series of the battery module. As indicated at 536, electrical energy (e.g., electrical charge) is shuttled between cells of the battery module to reduce or eliminate a voltage imbalance among the set of cells of the battery module. Supplying the electrical energy discharged from the set of the set of resistive-capacitive elements at 534 can include, for each inter-cell tap of the set of inter-cell taps, closing a switch (e.g., of the set of switches 320 of FIGS. 3 and 4) located along the inter-cell tap to establish an electrical connection between the set of resistive-capacitive elements and the set of cells of the battery module. As previously described with reference to the examples of FIGS. 3 and 4, an electrically conductive pathway of the module interface device joins the cathode bus with the anode bus, and the set of resistive-capacitive elements are arranged in an element-ordered series along the electrically conductive pathway. Furthermore, each inter-cell tap of the set of inter-cell taps joins the electrically conductive pathway at a respective location between a different neighboring pair of resistive-capacitive elements within the element-ordered series, as previously described with reference to FIGS. 3 and 4. In this configuration, the electrically conductive pathway and the set of resistive-capacitive elements form a voltage divider for the set of inter-cell taps.

At 540, the method can include determining whether to repeat the duty cycle. If the duty cycle is to be repeated ("YES" in FIG. 5), the method can return to 520 where the duty cycle can again be performed. In at least some examples, the method can include repeatedly performing the duty cycle at 520 over a period of time, including the charging portion performed at 522 and the cell balancing portion performed at 530. For example, the duty cycle can be repeatedly performed until the set of cells of the battery module are fully charged or attain a threshold charge. If the duty cycle is not to be repeated, ("NO" in FIG. 5), the method can end or proceed to another suitable process.

In at least some examples, the cell balancing portion of the duty cycle performed at 530 has a shorter duration of time than the charging portion of the duty cycle performed at 522. For example, the charging portion of the duty cycle can be performed for a majority of a duration of time of the duty cycle, while the cell balancing portion of the duty cycle can be performed for a shorter duration of time than the charging portion. The proportion of time of the duty cycle that the charging portion and the cell balancing portion are each performed can be represented as a fraction or percentage of the entire duration of time of the duty cycle. For example, the cell balancing portion can represent 5% (or other suitable value) of the duration of time of the duty cycle, while the charging portion can represent the remaining 95% (or other suitable value) of the duration of time of the duty cycle.

In at least some examples, the methods and operations described herein can be performed by a computing system of one or more computing devices. In particular, such methods and operations can be implemented as a computer-application program or service, an application-programming interface (API), a library, and/or other computer-program product.

FIG. 6 schematically depicts an example computing system 600 that is configured to perform the methods and operations described herein. Computing system 600 can form part of control system 120 of FIG. 1, as an example. Computing system 600 can take the form of one or more personal computers, server computers, network computers, mobile computers, and/or other computing devices.

Computing system 600 includes a logic machine 610, a storage machine 612, and one or more input / output (I/O) devices 614. Computing system 600 can include other components not shown in FIG. 6.

Logic machine 610 includes one or more physical logic devices configured to execute instructions. For example, logic machine 610 can be configured to execute instructions 620 to perform the methods and operations described herein, including method 500 of FIG. 5. Instructions 620 take the form of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

Logic machine 610 can include one or more processor devices configured to execute software instructions. Additionally or alternatively, logic machine 610 can include one or more hardware or firmware logic machines configured to execute hardware or firmware instructions. Processor devices of the logic machine can be single-core or multi-core, and the instructions executed thereon may be configured for sequential, parallel, and/or distributed processing. Individual components of the logic machine optionally may be distributed among two or more separate devices, which may be remotely located and/or configured for coordinated processing. Aspects of logic machine 610 can be virtualized and executed by remotely accessible, networked computing devices configured in a cloud-computing configuration.

Storage machine 612 includes one or more physical storage devices configured to hold instructions 620 and other data 622 executable by logic machine 610 to perform or otherwise implement the methods and operations described herein. When such methods and operations are performed or otherwise implemented, the state of storage machine 612 may be transformed-e.g., to hold different data.

Storage machine 612 can include removable and/or built-in storage devices. Storage machine 612 can include optical memory, semiconductor memory (e.g., RAM, EPROM, EEPROM, etc.), and/or magnetic memory (e.g., hard-disk drive, floppy-disk drive, tape drive, MRAM, etc.), among others. Storage machine 612 can include volatile, nonvolatile, dynamic, static, read/write, read-only, random-access, sequential-access, location-addressable, file-addressable, and/or content-addressable devices.

It will be appreciated that storage machine 612 includes one or more physical storage devices. However, aspects of instructions 620 described herein alternatively may be propagated by a communication medium (e.g., an electromagnetic signal, an optical signal, etc.) that is not held by a physical device for a finite duration in some conditions or states.

Aspects of logic machine 610 and storage machine 612 can be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 600 implemented to perform a particular function. In some cases, a module, program, or engine may be instantiated via logic machine 610 executing instructions 620 held by storage machine 612. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

FIG. 6 further depicts aspects of instructions 620. **In** the example of FIG. 6, instructions 620 can define aspects of a duty cycle 630 that can be performed by computing system 600, such as the duty cycle performed at 520 of method 500 of FIG. 5. For example, duty cycle 630 includes a charging portion 632 that can refer to the charging portion performed at 522 of method 500, and a cell balancing portion 634 that can refer to the cell balancing portion performed at 530 of method 500.

Input / output devices 614 can include devices that operatively couple the computing system to circuitry 240 of each module interface device, including the various switches of FIGS. 3 and 4. Accordingly, input / output devices 614 can be used by control system 110 to communicate with battery interface modules 122-1, 122-2 through 122-N of FIGS. 1-4 via electrical connections 124-1, and 124-2 through 124-N. Additionally, input / output devices 614 can include devices that operatively couple the computing system to other devices (e.g., periphery devices, computing devices, or other remote devices) or to communications networks (e.g., the Internet and/or a local area network). **In** at least some examples, input / output devices 614 can include periphery devices, such as a graphical display, user input device (e.g., keyboard, mouse, etc.), other input devices, and/or other output devices.

Further, the disclosure comprises configurations according to the following Examples. Example 1. A module interface device for a battery module that includes a set of multiple battery cells interconnected in a cell-ordered series between a cathode terminal and an anode terminal of the battery module, the module interface device comprising: a cathode bus having a battery-side cathode interface connectable to the cathode terminal of the battery module; an anode bus having a battery-side anode interface connectable to the anode terminal of the battery module; a set of one or more inter-cell taps connectable to respective inter-cell electrical interconnectors that interconnect neighboring pairs of cells within the cell-ordered series of the battery module; and a cell balancing circuit that includes: an electrically conductive pathway that joins the cathode bus with the anode bus, a set of multiple resistive-capacitive elements arranged in an element-ordered series along the electrically conductive pathway, wherein each inter-cell tap of the set of inter-cell taps joins the electrically conductive pathway at a respective location between a different neighboring pair of resistive-capacitive elements within the element-ordered series, and a set of one or more switches in which, for each inter-cell tap of the set of inter-cell taps, a respective switch of the set of switches is located along the inter-cell tap.

Example 2. The module interface device of Example 1, wherein the set of switches are each operable between an open state during a charging portion of a duty cycle in which the set of resistive-capacitive elements are charged by electrical energy supplied via the cathode bus and the anode bus, and a closed state during a cell balancing portion of the duty cycle in which the set of resistive-capacitive elements discharge electrical energy to the set of cells of the battery module connected to the module interface device to reduce a voltage imbalance among the set of cells. Example 3. The module interface device of any of Example 1-2, wherein each resistive-capacitive element includes one or more passive electrical components. Example 4. The module interface device of any of Example 1-3, wherein each resistive-capacitive element includes a resistor and a capacitor.

Example 5. The module interface device of Example 4, wherein the resistor and capacitor are arranged in parallel.

Example 6. The module interface device of any of Example 1-5, wherein the cathode bus further has a system-side cathode interface configured to be electrically coupled to an electrical load and/or an electrical source; and wherein the anode bus further has a system-side anode interface configured to be electrically coupled to the electrical load and/or the electrical source.

Example 7. The module interface device of Example 6, further comprising: a module isolation circuit operable to disconnect the battery module from at least one of the system-side cathode interface and/or the system-side anode interface.

Example 8. A method for controlling a module interface device connected to a battery module that includes a set of multiple cells interconnected in a cell-ordered series between a cathode terminal and an anode terminal of the battery module, the method comprising: during a charging portion of a duty cycle, supplying electrical energy from a source to a cathode bus and an anode bus of the module interface device, wherein the cathode bus has a battery-side cathode interface connected to the cathode terminal of the battery module, and the anode bus has a battery-side anode interface connected to the anode terminal of the battery module; wherein a first portion of the electrical energy supplied during the charging portion of the duty cycle charges the set of cells of the battery module via the cathode terminal and the anode terminal; wherein a second portion of the electrical energy supplied during the charging portion of the duty cycle charges a set of multiple resistive-capacitive elements of the module interface device; during a cell balancing portion of the duty cycle: discontinue supplying electrical energy from the source to the cathode bus and the anode bus of the module interface device, and supplying electrical energy discharged from the set of resistive-capacitive elements of the module interface device to the set of cells of the battery module via the cathode terminal, the anode terminal, and a set of one or more inter-cell taps connected to a set of one or more inter-cell electrical interconnectors that interconnect neighboring pair of cells within the cell-ordered series of the battery module.

Example 9. The method of Example 8, wherein supplying the electrical energy discharged from the set of the set of resistive-capacitive elements includes, for each inter-cell tap of the set of inter-cell taps, closing a switch located along the inter-cell tap to establish an electrical connection between the set of resistive-capacitive elements and the set of cells of the battery module.

Example 10. The method of Example 9, wherein an electrically conductive pathway of the module interface device joins the cathode bus with the anode bus; wherein the set of resistive-capacitive elements are arranged in an element-ordered series along the electrically conductive pathway; and wherein each inter-cell tap of the set of inter-cell taps joins the electrically conductive pathway at a respective location between a different neighboring pair of resistive-capacitive elements within the element-ordered series.

Example 11. The method of Example 10, wherein the electrically conductive pathway and the set of resistive-capacitive elements form a voltage divider for the set of inter-cell taps.

Example 12. The method of any of Example 8-11, wherein each resistive-capacitive element includes a resistor and a capacitor arranged in parallel; and wherein the second portion of the electrical energy supplied during the charging portion of the duty cycle charges the capacitor of each resistive-capacitive element of the set of resistive-capacitive elements.

Example 13. The method of any of Example 8-12, wherein the cell balancing portion of the duty cycle has a shorter duration of time than the charging portion of the duty cycle.

Example 14. The method of Example 13, further comprising: repeatedly performing the duty cycle including the charging portion and the balancing portion.

Example 15. A battery management system for management of a battery module that includes a set of multiple cells interconnected in a cell-ordered series between a cathode terminal and an anode terminal of the battery module, the battery management system comprising: a module interface device that includes: a cathode bus having a battery-side cathode interface connected to the cathode terminal of the battery module, an anode bus having a battery-side anode interface connected to the anode terminal of the battery module, a set of one or more inter-cell taps connected to respective inter-cell electrical interconnectors that interconnect neighboring pairs of cells within the cell-ordered series of the battery module, and a cell balancing circuit that includes: an electrically conductive pathway that joins the cathode bus with the anode bus, a set of multiple resistive-capacitive elements arranged in an element-ordered series along the electrically conductive pathway, wherein each inter-cell tap of the set of inter-cell taps joins the electrically conductive pathway at a respective location between a different neighboring pair of resistive-capacitive elements within the element-ordered series, and a set of one or more switches in which, for each inter-cell tap of the set of inter-cell taps, a respective switch of the set of switches is located along the inter-cell tap; and a control system configured to: during a charging portion of a duty cycle, operate the set of switches in an open state and supply electrical energy from a source to the cathode bus and the anode bus, wherein a portion of the electrical energy supplied during the charging portion of the duty cycle charges the set of resistive-capacitive elements, and during a cell balancing portion of the duty cycle, operate the set of switches in a closed state to supply electrical energy discharged from the set of resistive-capacitive elements to the set of cells of the battery module via the cathode terminal, the anode terminal, and the set of inter-cell taps.

Example 16. The battery management system of Example 15, wherein the set of switches are each operable between an open state during a charging portion of a duty cycle in which the set of resistive-capacitive elements are charged by electrical energy supplied via the cathode bus and the anode bus, and a closed state during a cell balancing portion of the duty cycle in which the set of resistive-capacitive elements discharge electrical energy to the set of cells of the battery module connected to the module interface device to reduce a voltage imbalance among the set of cells.

Example 17. The battery management system of any of Example 15-16, wherein each resistive-capacitive element includes one or more passive electrical components.

Example 18. The battery management system of any of Example 15-17, wherein each resistive-capacitive element includes a resistor and a capacitor.

Example 19. The battery management system of any of Example 15-18, wherein the cathode bus further has a system-side cathode interface configured to be electrically coupled to an electrical load and/or an electrical source; and wherein the anode bus further has a system-side anode interface configured to be electrically coupled to the electrical load and/or the electrical source.

Example 20. The battery management system of Example 19, further comprising: a module isolation circuit operable to disconnect the battery module from at least one of the system-side cathode interface and/or the system-side anode interface.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed. The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A module interface device (122-1) for a battery module (112-1) that includes a set of multiple battery cells (114) interconnected in a cell-ordered series (216) between a cathode terminal (210) and an anode terminal (212) of the battery module (112-1), the module interface device (122-1) comprising:
a cathode bus (226) having a battery-side cathode interface (220) connectable to the cathode terminal (210) of the battery module (112-1);
an anode bus (228) having a battery-side anode interface (222) connectable to the anode terminal (212) of the battery module (112-1);
a set of one or more inter-cell taps (260) connectable to respective inter-cell electrical interconnectors (250) that interconnect neighboring pairs of cells (116-1, 116-2) within the cell-ordered series (216) of the battery module (112-1); and
a cell balancing circuit (246) that includes:
an electrically conductive pathway (314) that joins the cathode bus (226) with the anode bus (228),
a set of multiple resistive-capacitive elements (310) arranged in an element-ordered series (316) along the electrically conductive pathway (314), wherein each inter-cell tap (224-1) of the set of inter-cell taps (260) joins the electrically conductive pathway (314) at a respective location between a different neighboring pair of resistive-capacitive elements (312-1, 312-2) within the element-ordered series (316), and
a set of one or more switches (320) in which, for each inter-cell tap (224-1) of the set of inter-cell taps (260), a respective switch (322-1) of the set of switches (320) is located along the inter-cell tap (224-1).

2. The module interface device (122-1) of claim 1, wherein the set of switches (320) are each operable between an open state during a charging portion (632) of a duty cycle (630) in which the set of resistive-capacitive elements (310) are charged by electrical energy supplied via the cathode bus (226) and the anode bus (228), and
a closed state during a cell balancing portion (634) of the duty cycle (630) in which the set of resistive-capacitive elements (310) discharge electrical energy to the set of cells of the battery module (112-1) connected to the module interface device (122-1) to reduce a voltage imbalance among the set of cells (250).

3. The module interface device (122-1) of claim 1 or 2, wherein each resistive-capacitive element (312-1, 312-2) includes one or more passive electrical components (302, 304).

4. The module interface device (122-1) of any one of the preceding claims, wherein each resistive-capacitive element (312-1, 312-2) includes a resistor (302) and a capacitor (304).

5. The module interface device (122-1) of claim 4, wherein the resistor (302) and capacitor (304) are arranged in parallel.

6. The module interface device (122-1) of any one of the preceding claims, wherein the cathode bus (226) further has a system-side cathode interface (230) configured to be electrically coupled to an electrical load (130) and/or an electrical source (132); and
wherein the anode bus (228) further has a system-side anode interface (232) configured to be electrically coupled to the electrical load (130) and/or the electrical source (132).

7. The module interface device (122-1) of claim 6, further comprising:
a module isolation circuit (244) configured to disconnect the battery module (112-1) from at least one of the system-side cathode interface (230) and/or the system-side anode interface (232).

8. A method (500) for controlling a module interface device (122-1) connected to a battery module (112-1) that includes a set of multiple cells (114) interconnected in a cell-ordered series (216) between a cathode terminal (210) and an anode terminal (212) of the battery module (112-1), the method (500) comprising:
during a charging portion (632) of a duty cycle (630), supplying electrical energy from a source (132) to a cathode bus (226) and an anode bus (228) of the module interface device (122-1), wherein the cathode bus (226) has a battery-side cathode interface (220) connected to the cathode terminal (210) of the battery module (112-1), and the anode bus (228) has a battery-side anode interface (222) connected to the anode terminal (212) of the battery module (112-1);
wherein a first portion of the electrical energy supplied during the charging portion (632) of the duty cycle (630) charges the set of cells (114) of the battery module (112-1) via the cathode terminal (210) and the anode terminal (212);
wherein a second portion of the electrical energy supplied during the charging portion (632) of the duty cycle (630) charges a set of multiple resistive-capacitive elements (310) of the module interface device (122-1);
during a cell balancing portion (634) of the duty cycle (630):
discontinue supplying electrical energy from the source (132) to the cathode bus (226) and the anode bus (228) of the module interface device (122-1), and
supplying electrical energy discharged from the set of resistive-capacitive elements (310) of the module interface device (122-1) to the set of cells (114) of the battery module (112-1) via the cathode terminal (210), the anode terminal (212), and a set of one or more inter-cell taps (260) connected to a set of one or more inter-cell electrical interconnectors (250) that interconnect neighboring pair of cells (114) within the cell-ordered series (216) of the battery module (112-1).

9. The method (500) of claim 8, wherein supplying the electrical energy discharged from the set of resistive-capacitive elements (310) includes, for each inter-cell tap (224-1) of the set of inter-cell taps (260), closing a switch (322-1) located along the inter-cell tap (224-1) to establish an electrical connection between the set of resistive-capacitive elements (310) and the set of cells (114) of the battery module (112-1).

10. The method (500) of claim 9, wherein an electrically conductive pathway (314) of the module interface device (122-1) joins the cathode bus (226) with the anode bus (228);
wherein the set of resistive-capacitive elements (310) are arranged in an element-ordered series (316) along the electrically conductive pathway (314); and
wherein each inter-cell tap (224-1) of the set of inter-cell taps (260) joins the electrically conductive pathway (314) at a respective location between a different neighboring pair (312-1, 312-2) of resistive-capacitive elements (310) within the element-ordered series (316).

11. The method (500) of claim 10, wherein the electrically conductive pathway (314) and the set of resistive-capacitive elements (310) form a voltage divider for the set of inter-cell taps (260).

12. The method (500) of claim 8, wherein each resistive-capacitive element (312-1, 312-2) includes a resistor (302) and a capacitor (304) arranged in parallel; and
wherein the second portion of the electrical energy supplied during the charging portion (632) of the duty cycle (630) charges the capacitor (304) of each resistive-capacitive element (312-1, 312-2) of the set of resistive-capacitive elements (310).

13. The method (500) of claim 8, wherein the cell balancing portion (634) of the duty cycle (630) has a shorter duration of time than the charging portion (632) of the duty cycle (630).

14. The method (500) of claim 13, further comprising:
repeatedly performing the duty cycle (630) including the charging portion (632) and the balancing portion (634).

15. A battery management system (100) for management of a battery module (112-1) that includes a set of multiple cells (114) interconnected in a cell-ordered series (216) between a cathode terminal (210) and an anode terminal (212) of the battery module (112-1), the battery management system (100) comprising:
a module interface device (122-1) that includes:
a cathode bus (226) having a battery-side cathode interface (220) connected to the cathode terminal (210) of the battery module (112-1),
an anode bus (228) having a battery-side anode interface (222) connected to the anode terminal (212) of the battery module (112-1),
a set of one or more inter-cell taps (260) connected to respective inter-cell electrical interconnectors (250) that interconnect neighboring pairs of cells (114) within the cell-ordered series (216) of the battery module (112-1), and
a cell balancing circuit (246) that includes:
an electrically conductive pathway (314) that joins the cathode bus (226) with the anode bus (228),
a set of multiple resistive-capacitive elements (310) arranged in an element-ordered series (316) along the electrically conductive pathway (314), wherein each inter-cell tap (224-1) of the set of inter-cell taps (260) joins the electrically conductive pathway (314) at a respective location between a different neighboring pair (312-1, 312-2) of resistive-capacitive elements (310) within the element-ordered series (316), and
a set of one or more switches (320) in which, for each inter-cell tap (224-1) of the set of inter-cell taps (260), a respective switch (322-1) of the set of switches (320) is located along the inter-cell tap; and
a control system (120) configured to:
during a charging portion (632) of a duty cycle (630), operate the set of switches (320) in an open state and supply electrical energy from a source (132) to the cathode bus (226) and the anode bus (228), wherein a portion of the electrical energy supplied during the charging portion (632) of the duty cycle (630) charges the set of resistive-capacitive elements (310), and
during a cell balancing portion (634) of the duty cycle (630), operate the set of switches (320) in a closed state to supply electrical energy discharged from the set of resistive-capacitive elements (310) to the set of cells (114) of the battery module (112-1) via the cathode terminal (210), the anode terminal (212), and the set of inter-cell taps (260).
